# EUROPÄISCHE PATENTSCHRIFT

(11) **EP 2 737 159 B1**
(45) Veröffentlichungstag und Bekanntmachung des Hinweises auf die Patenterteilung: **15.02.2017**
(21) Anmeldenummer: 12746266.1
(22) Anmeldetag: 24.07.2012
(51) Int. Cl.: E21B 17/046

(54) **AUFNAHME FÜR ROHRFÖRMIGE BOHRWERKZEUGE MIT VERSCHIEDENEN DURCHMESSERN**
HOLDER FOR TUBULAR DRILLING TOOLS HAVING DIFFERENT DIAMETERS
MANCHON PORTE-OUTIL RECEVANT DES OUTILS DE FORAGE TUBULAIRES PRÉSENTANT DE DIFFÉRENTS DIAMÈTRES

(30) Priorität: 29.07.2011 DE 102011108999
(43) Veröffentlichungstag der Anmeldung: 04.06.2014
(73) Patentinhaber: ABF- Bohrtechnik GmbH & Co KG, 54516 Wittlich (DE)
(72) Erfinder: MIESEN, Rainer, 54538 Bausendorf (DE)
(74) Vertreter: Pöhner, Wilfried Anton
(86) Internationale Anmeldenummer: PCT/DE2012/000746
(87) Internationale Veröffentlichungsnummer: WO 2013/017117

(56) Entgegenhaltungen:
- DE-A1-102006 022 613
- DE-U1- 8 627 861
- US-A1- 2007 137 899

## Beschreibung

Die Erfindung bezieht sich auf eine Werkzeugaufnahme an einem Bohrgetriebe für rohrförmige Bohrwerkzeuge mit wenigstens zwei verschiedenen Durchmessern, wobei die Aufnahme ausgestattet ist mit einer hohlzylindrischen Ausnehmung, deren lichte Weite den Außenabmessungen des einen Bohrwerkzeugs entspricht und mit wenigstens einem radial ausgerichteten Verriegelungsbolzen, der in die Wandung der hohlzylindrischen Ausnehmung eingebaut ist und der in eine entsprechende Öffnung des Bohrwerkzeuges eingreift.

Es zählt zum aktuellen Stand der Technik im Bereich des Tiefbaues, dass zum Einbringen von Bohrungen - z.B. für Fundamentpfähle - als Werkzeug großformatige Rohre durch Dreh- und/oder Rüttelbewegungen senkrecht in den Boden getrieben werden. Als Antriebseinheit sind dafür Bohrgetriebe bekannt, welche mittels einer Werkzeugaufnahme auf das obere Ende des Bohrwerkzeuges aufgesetzt und über seitlich in das Bohrwerkzeug einzuschiebende Verriegelungsbolzen verkuppelt werden.

Dabei hat sich im praktischen Gebrauch ein Vorzugswert für den Durchmesser der Bohrwerkzeuge durchgesetzt, der insbesondere für große, mehrstöckige Bauten sinnvoll ist. Für kleinere Bauwerke, insbesondere in direkter Nachbarschaft zu bereits bestehenden Gebäuden sind jedoch Fundamentpfähle mit einem derart großen Durchmesser oft nicht erforderlich. Hier reichen Pfahlgründungen mit erheblich schlankeren Pfählen, die beim Einbringen der Bohrung und bei den kosten des Fundamentmaterials höchst willkommene Einsparungen ergeben.

Z. B. bei vielgestaltigen Gebäuden, die aus kleineren Gebäudeflügeln mit einer geringen Anzahl von Stockwerken und großen Gebäudeflügeln mit einer großen Anzahl von Stockwerken bestehen, ist es sinnvoll, den Durchmesser der Gründungspfähle auf den jeweiligen Bedarf anzupassen.

Deshalb präsentiert auf aktuellem Stand der Technik die EP 1 010 854 ein sog. "Doppelkopf-Bohrgerät", das durch Wechsel einer "Antriebseinheit" auf ein Bohrwerkzeug mit einem anderen Durchmesser umgestellt werden kann. Für jeden Durchmesserwert eines Bohrwerkzeuges ist jeweils eine dazu passende Antriebseinheit erforderlich. Sie wird in Arbeitsstellung der Bohreinrichtung auf einer vertikal ausgerichteten Schiene, dem "Mäkler" vertikal verfahren. Zum Wechsel der Antriebseinheit muss sie mit einem zusätzlichen Hebezeug bis über das obere Ende des Mäklers hinaus angehoben, gelöst und auf einem Abstellplatz zwischengelagert werden. Dann muss eine andere, an den neuen Durchmesser angepasste Antriebseinheit aufgenommen und auf den Mäkler aufgeschoben werden.

Wesentliche Nachteile dieser Anordnung sind, dass für jeden weiteren Durchmesser von Bohrrohren jeweils ein weiterer, relativ aufwändiger Antriebsschlitten beschafft und bereitgehalten werden muss. Bei einem häufigen Wechsel des Durchmessers der Bohrrohre ist es im praktischen Betrieb besonders hinderlich, dass eine relative lange Zeit verstreicht, bis ein Bohrrohr mit einem anderen Durchmesser aufgenommen und befestigt ist und das Bohrgerät weiter bohren kann.

Die Offenlegungsschrift DE 10 2006 022 613 A1 betrifft eine Bohrantriebseinheit zum Antreiben eines Bohrgestänges mit einem Drehantrieb zum Erzeugen eines Bohrdrehmomentes, an dessen Abtriebswelle eine Steckverbindungseinrichtung angeordnet ist, welche zum Aufstecken eines Bereiches des Bohrgestänges ausgebildet ist. Das Bohrgestänge ist dabei axial verschiebbar und gleichzeitig in einer Umfangsrichtung drehfest zum Übertragen des Bohrdrehmomentes gehalten.
Es wird zudem ein Bohrgestängeelement mit einem Endbereich vorgeschlagen, welcher als ein Teil einer drehfesten Steckverbindung ausgebildet ist und an welchem eine Verbindungsausnehmung zum form- und/oder kraftschlüssigen Verbinden mit einem angrenzenden Bohrgestängeelement vorgesehen ist.

In der Offenlegungsschrift US 2007/137899 A1 ist lediglich ein Distanzring in einer hohlzylindrischen Ausnehmung beschrieben.

Die Gebrauchsmusterschrift DE 86 27 861 U1 betrifft ein Rohrgestänge mit Basisrohr und Schaftrohr und einem Rohrverbinder.

Auf diesem Hintergrund hat sich die Erfindung die Aufgabe gestellt, eine Werkzeugaufnahme zu entwickeln, die mit erheblich geringeren Kosten bei der Investition einen einfachen und schnellen Wechsel zu einem Bohrwerkzeug mit einem anderen Durchmesser ermöglicht, wobei in einer Variante auch ein ferngesteuerter Wechsel ohne manuelle Eingriffe an der Werkzeugaufnahme möglich sein soll.

Als Lösung lehrt die Erfindung, dass wenigstens eine weitere hohlzylindrische Ausnehmung vorhanden ist, die zu den Außenabmessungen eines der anderen Bohrwerkzeuge komplementär ist.

Es ist eine wesentliche Erkenntnis der Erfindung, dass ein Bohrgerät bereits schon dann mit einem Bohrwerkzeug von kleinerem Durchmesser betrieben werden kann, wenn lediglich der Durchmesser der Aufnahme an den kleineren Durchmesser des neuen Bohrwerkzeuges angepasst wird.

Im Gegensatz zu der zuvor genannten Patentschrift ist eine zusätzliche Veränderung des Getriebes keinesfalls zwangsläufig erforderlich. Vielmehr reduziert sich wegen des kleineren Durchmessers vom Bohrwerkzeug auch das erforderliche Drehmoment, sodass der vorhandene Motor und ein eventuell zwischen Motor und Bohrwerkzeug bereits vorhandenes Getriebe durchaus auch mit einem Durchmesser einwandfrei zusammen arbeiten, der kleiner als der Nenndurchmesser ist. Damit entfällt der aufwändige Wechsel der Antriebseinheit mit seinen hohen Investitionskosten und der relativ sehr langen Zeit für den Wechsel.

Insbesondere dann, wenn ein schneller und häufiger Wechsel.der Durchmesser der Bohrwerkzeuge erforderlich ist und der Anteil der Bohrungen mit kleinem Durchmesser nur relativ gering ist, wird mit dem erfinderischen Prinzip ein guter Kompromiss zwischen den Investitionskosten und der Flexibilität der Bohreinrichtung erreicht.

Falls der Anteil von Bohrungen mit relativ kleinem Durchmesser relativ sehr hoch ist, so ist es prinzipiell denkbar, das schlankere Bohrwerkzeug mit einer höheren Drehzahl zu betreiben als das größte, einsetzbare Bohrwerkzeug. Die Erfindung schlägt in diesem Fall vor, anstelle eines Schattgetriebes oder anstelle des Getriebewechsels den Antriebsmotor so auszuführen, dass er über den Nennbetriebspunkt für das Bohrwerkzeug mit dem größten Durchmessers hinaus mit einer höheren Drehzahl bei gleichzeitig reduziertem Drehmoment betrieben werden kann.

Dafür kann z.B. ein elektrischer Antriebsmotor "mehrpolig" ausgeführt werden oder sein elektrisches Feld - die Erregung - geschwächt werden oder die Drehzahl des Antriebsmotors wird über eine geeignete Elektronik geregelt.

Es ist das entscheidende Merkmal der Erfindung; nachgewiesen zu haben, dass für den Wechsel zu einem Bohrwerkzeug mit einem anderen Durchmesser in der Werkzeugaufnahme nur eine weitere, hohlzylindrische Ausnehmung vorzusehen ist, die zu dem jeweils gewünschten Bohrwerkzeug komplementär ist und die in der gleichen Werkzeugaufnahme anzuordnen ist.

Im allgemeinsten Fall sind keine weiteren und darüber hinaus gehenden Einrichtungen erforderlich. Es ist also ein Verdienst der Erfindung, erkannt zu haben, dass nur mit einer derart einfachen Zusatzeinrichtung schon ein Wechsel des Durchmessers vom Bohrwerkzeug möglich ist.

In der Patentanmeldung wird der Übersichtlichkeit halber nur eine Werkzeugaufnahme für zwei verschiedene Bohrwerkzeuge beschieben. Falls jedoch drei oder mehr verschiedene Durchmesser von Bohrwerkzeugen eingesetzt werden sollen, so lässt sich das Prinzip der Erfindung auch für einen dritten, noch kleineren Wert eines Durchmessers und weitere noch kleinere Werte realisieren, indem für jeden Durchmesserwert auch eine weitere, dem entsprechende hohlzylindrische Ausnehmung geschaffen wird.

Der Übersichtlichkeit halber werden weitere mögliche Ausführungsvarianten jedoch nur für einen einzigen, weiteren Durchmesserwert prinzipiell erläutert.

In einer ersten Ausführungsvariante wird die zweite, hohlzylindrische Ausnehmung dadurch gebildet, dass in die erste, hohlzylindrische Ausnehmung mit dem großen Innendurchmesser ein Distanzring eingesetzt wird, der die zweite, hohlzylindrische Ausnehmung mit einem kleineren Innendurchmesser aufweist. Um die Bohrwerkzeuge auch in diesem kleineren Innendurchmesser fixieren zu können, weist der Distanzring Durchlässe auf, durch welche die Verriegelungsbolzen der Verriegelungen für das Bohrwerkzeug hindurch in die Öffnungen des Bohrwerkzeuges mit dem kleinen Durchmesser geschoben werden können. Dementsprechend sind die Verriegelungsbolzen soweit verlängert, dass sie tatsächlich bis in diese Öffnungen hinein reichen.

Wenn von einem ersten Bohrwerkzeug mit kleinem Durchmesser zu einem zweiten Bohrwerkzeug mit ebenso kleinem Durchmesser gewechselt werden muss, so müssen diese verlängerten Verriegelungsbolzen nur soweit in den Distanzring zurückgefahren werden, dass das neue Bohrwerkzeug einwandfrei einführbar ist. Deshalb stehen die Verriegelungsbolzen nach außen hin auch nicht weiter über den Außendurchmesser der Werkzeugaufnahme hinaus, als es für die Führung der Bolzen und für die Materialstärke des Bohrwerkzeuges erforderlich ist.

Falls jedoch anstelle eines Bohrwerkzeuges mit einem kleinen Durchmesser ein Bohrwerkzeug mit großem Durchmesser eingesetzt werden soll, so müssen die Verriegelungsbolzen bis in die, große, erste hohlzylindrische Ausnehmung zurück gefahren werden. Dann kann der Distanzring durch sein Eigengewicht aus der Aufnahme heraus fallen und z.B. von einem Kissen aufgenommen werden.

Alternativ kann der Distanzring auch durch eine Stange abgenommen werden, an deren Ende ein Aufnahmeteller und ein mittiger Zentrierkonus befestigt sind in der Mitte mit geringem Aufwand manuell. Dann ist die große, hohlzylindrische Ausnehmung wieder frei für ein Bohrwerkzeug mit großem Durchmesser.

Wenn in der vorgenannten Ausführungsvariante nur die für ein Bohrwerkzeug erforderliche Mindestanzahl von Verriegelungen vorhanden ist, so müssen für den Wechsel zu einem größeren Bohrwerkzeug zusätzlich zum Entfernen des Distanzringes auch noch die Verriegelungsbolzen jeder Verriegelung gegen ein kürzeres Exemplar ausgetauscht werden.

Um diesen Vorgang einzusparen, schlägt die Erfindung in einer weilernen Ausführungsvariante vor, dass neben einer ersten Reihe von Verriegelurigen noch zusätzlich eine zweite Reihe von Verriegelungen eingebaut wird. Es ist bei der Konstruktion sinnvoll, diese zweite Reihe um etwa die Hälfte des Winkels zwischen zwei benachbarten Verriegelungen gegeneinander zu verschwenken. Dabei bezieht sich der Winkel auf die Mittelachsen der Werkzeugaufnahmen, die allesamt radial zum Bohrwerkzeuge und radial zur Aufnahme ausgerichtet sind. Dann ist eine erste Reihe von Verriegelungen vorhanden, die mit kurzen Verriegelungsbolzen auf den großen Durchmesser eines Bohrwerkes wirkt und eine zweite, konstruktiv dagegen verschwenkte Reihe von Verriegelungen, die mit langen Verriegelungsbolzen auf ein Bohrwerkzeug mit relativ kleinem Durchmesser wirkt. In dieser Ausführungsvariante ist die Anzahl der Verriegelungen verdoppelt, von denen jeweils nur jede zweite im praktischen Einsatzfall aktiv ist.

Der Vorzug dieser spezialisierten Verriegelungseinheiten ist jedoch, dass der Verriegelungsbolzen stets nur von einem zum anderen Anschlag zu bewegen ist.

Wenn hingegen die Anzahl der Verriegelungsbolzen möglichst gering sein soll, so schlägt die Erfindung als eine andere Alternative vor, dass nur so viele Verriegelungsbolzen vorhanden sind, wie auch vom Bohrwerkzeug mit der größten Anzahl von Öffnungen zur Aufnahme eines Verriegelungsbolzens tatsächlich benötigt werden. Einwesentlicher Unterscheid dieser Konfiguration zu den vorherigen Varianten ist jedoch, dass die Verriegelungsbolzen in zwei verschiedenen Arbeitsstellungen fixierbar sein müssen:
In einer ersten Arbeitsstellung ragen sie nur soweit aus der großen hohlzylindrischen Ausnehmung heraus, wie es für das Hineinschieben in die Öffnungen von Bohrwerkzeugen mit großem Durchmesser erforderlich ist.

In einer zweiten Arbeitsstellung werden die Verriegelungsbolzen weiter in den Innenraum der Werkzeugaufnahme hinein geschoben und zwar durch die Durchlässe des Distanzringes hindurch, bis sie in die Öffnungen des Bohrwerkzeuges mit kleinem Durchmesser hineinreichen.

Verriegelungen nach diesem Prinzip können auch aus der Ferne betätigt werden. So kann z.B. der Verriegelungsbolzen mit einem seitlichen Führungszapfen in eine Führungsnut einer zylindrischen Führungshülse der Verriegelung hineinragen, wobei sich diese Führungsnut spiralförmig um die Führungshülse herum windet. Dann kann die radiale Stellung des Verriegelungsbolzens durch ein Verdrehen verändert werden, z.B. mittels eines Hebels, der an das Ende des Verriegelungsbolzens angesetzt ist.

Dabei ist es eine sinnvolle, weitere Variante, in der Stellung des Verriegelungsbolzens für den "großen" Durchmesser eines Bohrwerkzeuges - also zwischen den beiden Endanschlägen des Führungsstiftes - in der spiralförmigen Nut eine Kerbe vorzusehen, in der der Führungsstift einrastet. Bei der Aufnahme eines Bohrwerkzeuges mit großem Durchmesser ist dann die Fixierung des Verriegelungsbolzens erleichtert und weniger abhängig von einer exakten Positionierung durch den Antrieb der Verriegelung.

In einer weiter verfeinerten Ausführungsvariante besteht der Distanzring aus Segmenten, die verschwenkbar an der Werkzeugaufnahme befestigt sind und aus dessen hohlzylindrischer Aufnahme heraus bis über deren Durchmesser hinaus verschwenkbar sind.

Der Sinn und ein Vorteil dieser Anordnung sind, dass bei einem häufigen Wechsel vom kleinen zum großen Durchmesser die manuelle Entnahme des Distanzringes eingespart wird. Stattdessen können die Segmente des Distanzringes von fernsteuerbaren Antrieben bewegt werden, die sie aus der ersten, großen hohlzylindrischen Ausnehmung soweit nach außen verschwenken, dass sie mit dem "großen" Bohrwerkzeug nicht kollidieren.

Bei dieser Variante bieten sich als Trennlinien für die Segmente eines Distanzringes die Durchlässe zum Durchführen der Verriegelungsbolzen an. Die Erfindung schlägt vor, dass diese Durchlässe durch Abstände zwischen den Segmenten gebildet werden.

Für die Realisierung der erfinderischen Idee, zusätzlich zu einer esten hohlzylindrischen Ausnehmung zur Aufnahme eines Bohrwerkzeuges mit großem Durchmesser wenigstens eine weitere, hohlzylindrische Ausnehmung für ein Bohrwerkzeug kleineren Durchmessers vorzusehen, präsentiert die Erfindung noch eine prinzipiell andere, zweite Ausführungsvariante:
Anstelle eines Distanzringes, der in eine erste, große hohlzylindrische Aufnahme eingesetzt wird, werden in der zweiten Ausführungsvariante zwei verschiedene hohlzylindrische Ausnehmungen in die Werkzeugaufnahme eingearbeitet, von denen die zweite hohlzylindrische Ausnehmung einen kleineren Innendurchmesser aufweist und oberhalb der ersten hohlzylindrischen Ausnehmung angeordnet ist, wenn sich die Werkzeugaufnahme in Arbeitsstellung befindet. Dann ragt ein Bohrwerkzeug mit kleinerem Durchmesser, das in dieser zweiten, kleinen Ausnehmung befestigt ist, durch die erste, große Ausnehmung hindurch.

Da die beiden Ausnehmungen in dieser Variante auf unterschiedlichen Punkten der Längsachse der Werkzeugaufnahme angeordnet sind, benötigt jede der beiden Ausnehmungen auch jeweils eigene Verriegelungsbolzen.

In jeder der geschilderten Varianten können die Verriegelungen aus der Ferne betätigt werden, z.B. über Pneumatikzylinder, Hydraulikzylinder oder Elektroantriebe. Damit wird ein sehr schneller und sicherer Wechsel erreicht.

Da dieser Verkupplungsvorgang in bis zu 6 Meter Höhe stattfindet und je nach der Tiefe und je nach der Vorschubgeschwindigkeit der Bohrung sehr häufig durchgeführt werden muss, wird die Effizienz des Bohrgerätes spürbar gesteigert, wenn solche Antriebe die Verriegelungsbolzen in das Bohrwerkzeug hinein schieben und auch wieder heraus ziehen.

Im Folgenden sollen weitere Einzelheiten und Merkmale der Erfindung anhand eines Beispiels näher erläutert werden. Das abgebildete Beispiel soll die Erfindung jedoch nicht einschränken, sonder nur erläutern. Es zeigt in schematischer Darstellung:

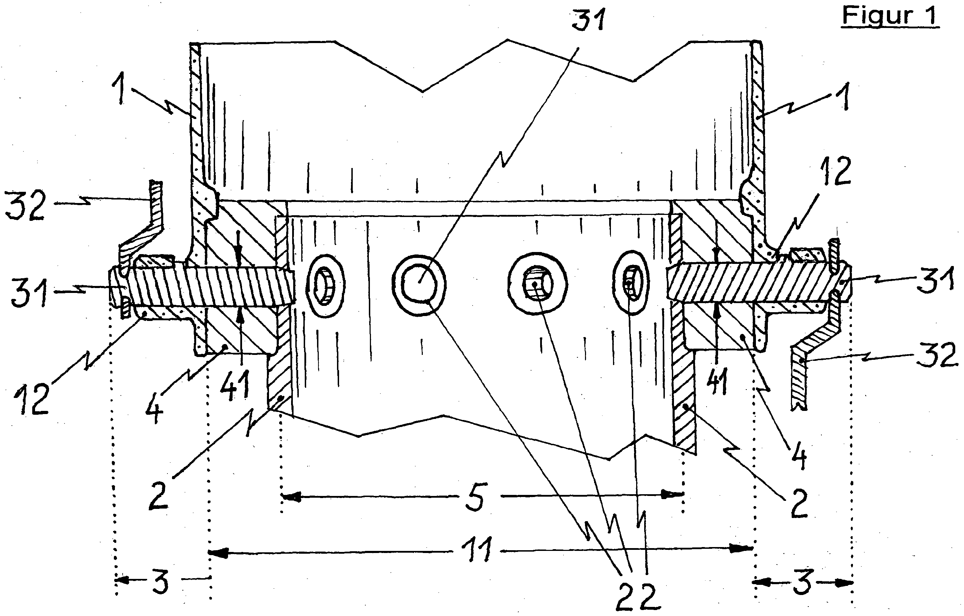

- Figur 1: Schnitt durch eine Werkzeugaufnahme mit mehreren Verriegelungsbolzen

In Figur 1 ist der Schnitt durch eine erfindungsgemäße Werkzeugausnahme 1 und ein darin befestigtes Bohrwerkzeug 2 gezeichnet.

Dargestellt ist ein Betriebszustand mit dem kleineren von zwei verschiedenen Bohrwerkzeugen 2 , die für diese Werkzeugaufnahme 1 geeignet sind. Dabei ist dieses schlanke Bohrwerkzeug 2 in einen Distanzring 4 eingeschoben, der wiederum in die hohlzylindrische Ausnehmung 11 der Werkzeugaufnahme 1 hinein passt.

In Figur 1 ist sehr deutlich zu erkennen, dass die drei vorgenannten Elemente jeweils von mehreren Verriegelungsbolzen 31 durchdrungen werden. In der gezeichneten Ausführungsvariante sind diese Verriegelungsbolzen 31 in ie einer Führungshülse 12 verschiebbar und verdrehbar gelagert, die an die Werkzeugaufnahme 1 angeformt sind. An der nach oben weisenden Kante eines jeden Verriegelungsbolzens 31 ist ein Führungszapfen zu erkennen, der in eine Führungsnut der Führungshülsen 12 hineinragt.

In Figur 1 ist der Übersichtlichkeit halber nicht eingezeichnet, dass die Führungsnut spiralförmig um die Führungshülse 12 herumläuft. Es ist jedoch vorstellbar, dass durch Verschwenken des Verriegelungsbolzens 31 mittels des Kurbeltriebs 32 der Verriegelungsbolzen 31 um seine Längsachse verschwenkt wird und dadurch von dem Führungszapfen in der Führungsnut in seiner Längsrichtung bewegt wird.

In dem gezeichneten Zustand ist der Verriegelungsbolzen 31 bis zum Anschlag des Kurbeltriebs 32 und damit auch in die Öffnungen 22 des Bohrwerkzeuges 1 eingeschoben.

In Figur 1 ist sehr deutlich zu erkennen, dass durch Zurückziehen der Verriegelurigsbolzen 31 um die Wandstärke des Bohrwerkzeuges 2, dieses aus dem Distanzring 4 herausnehmbar ist.

Zum Herausnehmen des Distanzringes 4 aus der Ausnehmung 11 der Werkzeugaufnahme 1 müssen die Verriegelungsbolzen 31 aus den Durchlässen 41 im Distanzring 4 vollständig herausgezogen werden. Dann kann auch der Distanzring 4 aus der ersten, hohlzylindrischen Ausnehmung 11 der Werkzeugaufnahme 1 herausgenommen werden.

In Figur 1 ist sehr gut nachvollziehbar, dass dann ein "großes" Bohrwerkzeug 2, dessen Außendurchmesser dem Durchmesser der hohlzylindrischen Ausnehmung 11 entspricht, darin eingesetzt werden kann und durch Zurückschieben der Verriegelungsbolzen 31 durch die Öffnungen 22 im größeren Bohrwerkzeug 1 fixiert werden kann.

Von den insgesamt vier Verriegelungsbolzen 31 der dargestellten Variante sind zwei Verriegelungsbolzen 31 im Schnitt und von einem Verriegelungsbolzen 31 die in das Bohrwerkzeug 2 hinein weisende Stirnfläche zu sehen.

### Bezugszeichenliste

- 1: Werkzeugaufnahme
- 11: höhlzylindrische Ausnehmung in Werkzeugaufnahme 1
- 12: Führungshülse für Verriegelungsbolzen 31
- 2: Bohrwerkzeug 1 , von Werkzeugaufnahme 1 aufnehmbar

- 22: Öffnung im Bohrwerkzeug 1
- 3: Verriegelung
- 31: Verriegelungsbolzen, von Verriegelung 3 bewegbar
- 32: Kurbeltrieb für Verriegelungsbolzen 31
- 4: Distanzring, in Ausnehmung 11 einsetzbar
- 41: Durchlass im Distanzring 4 für die Verriegelungsbolzen 31
- 5: weitere hohlzylindrische Ausnehmung

## Patentansprüche

1. Werkzeugaufnahme (1) an einem Bohrgetriebe für rohrförmige Bohrwerkzeuge (2) mit wenigstens zwei verschiedenen Durchmessern, wobei die Aufnahme (1) ausgestattet ist
- mit einer hohlzylindrischen Ausnehmung (11), deren lichte Weite den Außenabmessungen des einen Bohrwerkzeuges (2) entspricht, und
- mit wenigstens einem radial ausgerichteten Verriegelungsbolzen (31),
- der in die Wandung der hohlzylindrischen Ausnehmung (11) eingebaut ist und
- der in eine entsprechende Öffnung (22) des Bohrwerkzeuges (2) eingreift,
**dadurch gekennzeichnet, dass**
wenigstens eine weitere hohlzylindrische Ausnehmung (5) vorhanden ist, die zu den Außenabmessungen eines der anderen Bohrwerkzeuge (2) komplementär ist.

2. Werkzeugaufnahme (1) nach Anspruch 1, **dadurch gekennzeichnet**, däss
- in eine erste hohlzylindrische Ausnehmung (11)mit großem Innendurchmesser ein Distanzring (4) einsetzbar ist,
- der eine hohlzylindrische Ausnehmung (5) mit kleinem Innendurchmesser aufweist und
- der Durchlässe (41) für die Verriegelungsbolzen (31) enthält und
- die Verriegelungsbolzen (31) soweit verlängert sind, dass sie durch die Durchlässe (41) des Distanzringes (4) hindurch in die Öffnungen (22) eines Bohrwerkzeuges (2) mit kleinem Durchmesser hineinragen.

3. Werkzeugaufnahme (1) nach Anspruch 2, **dadurch gekennzeichnet, dass**
- eine erste Reihe von Verriegelungen (3) kurze Verriegelungsbolzen (31) aufweist, die in die Öffnungen (22) eines Bohrwerkzeuges (2) mit großem Durchmesser hineinschiebbar sind und
- eine zweite Reihe von Verriegelungen (3) lange Verriegelungsbolzen (31) aufweist,
- die durch die Durchlässe (41) hindurch bis in die Öffnungen (22) eines Bohrwerkzeuges (2) mit kleinem Durchmesser hinein schiebbar sind und
- die bis in die Wandung der ersten hohlzylindrischen Aufnahme (11) zurückziehbar sind.

4. Werkzeugaufnahme (1) nach Anspruch 2, **dadurch gekennzeichnet, dass** die Verriegelungsbolzen (31) von den Verriegelungen (3)
- in einer ersten Arbeitsstellung fixierbar sind, in der sie nur bis in die Öffnungen (22) eines Bohrwerkzeuges (2) mit großem Durchmesser hineinragen und zusätzlich
- in einer zweiten Arbeitsstellung fixierbar sind, in der sie bis in die Öffnungen (22) eines Bohrwerkzeuges (2) mit kleinem Durchmesser hineinragen.

5. Werkzeugaufnahme 1 nach einem der vorhergehenden Ansprüche, **dadurch gekennzeichnet, dass** der Distanzring (4) aus Segmenten besteht,
- die verschwenkbar an der Werkzeugaufnahme (1) befestigt sind und
- die aus der ersten hohlzylindrischen Aufnahme (11) heraus bis über deren Durchmesser hinaus verschwenkbar sind.

6. Werkzeugaufnahme (1) nach Anspruch 5, **dadurch gekennzeichnet, dass**
- die Segmente in Bezug auf den Umfang des Distanzringes (4) zueinander beabstandet sind und
- die Abstände die Durchlässe (41) für die Verriegelungsbolzen bilden.

7. Werkzeugaufnahme (1) nach Anspruch 1, **dadurch gekennzeichnet, dass** sie
- eine erste hohlzylindrische Aufnahme (11) mit großem Innendurchmesser aufweist und
- eine zweite hohlzylindrische Aufnahme (12) mit kleinem Innendurchmesser aufweist, die in Arbeitsstellung oberhalb der ersten hohlzylindrischen Aufnahme (11) angeordnet ist und
- für jede der beiden Aufnahmen (11,12) jeweils wenigstens eine Verriegelung (3) mit einem Verriegelungsbolzen (31) vorhanden ist.

8. Werkzeugaufnahme 1 nach einem der vorhergehenden Ansprüche, **dadurch gekennzeichnet, dass** die Verriegelungen (3) aus der Ferne betätigbar sind, z. B. über Pneumatikzylinder, Hydraulikzylinder oder Elektroantriebe.

## Claims

1. Tool receptacle (1) on a drilling gearing for tubular drilling tools (2) comprising at least two different diameters, the receptacle (1) being equipped
- - with a hollow cylindrical recess (11), of which the inside width corresponds to the exterior dimensions of one drilling tool (2),
and
- with at least one radially oriented locking bolt (31)
- which is installed in the wall of the hollow cylindrical recess (11) and
- which engages in a corresponding opening (22) of the drilling tool (2),
**characterised in that**
at least one further hollow cylindrical recess (5) is present, which is complementary to the external dimensions of one of the other drilling tools (2).

2. Tool receptacle (1) according to claim 1, **characterised in that**
- into a first hollow cylindrical recess (11) with large internal diameter there can be inserted a spacer ring (4),
- which has a hollow cylindrical recess (5) with small internal diameter and,
- contains passages (41) for the locking bolts (31) and
- the locking bolts (31) are extended to the extent that they project through the passages (41) of the spacer ring (4) into the openings (22) of a drilling tool (2) with small diameter.

3. Tool receptacle (1) according to claim 2, **characterised in that**
- a first row of locks (3) comprises short locking bolts (31), which can be inserted into the openings (22) of a drilling tool (2) with large diameter and
- a second row of locks (3) comprises long locking bolts (31),
- which can be pushed through the passages (41) into the openings (22) of a drilling tool (2) with small diameter and
- which can be drawn back as far as into the wall of the first hollow cylindrical receptacle (11).

4. Tool receptacle (1) according to claim 2, **characterised in that**, by means of the locks (3), the locking bolts (31)
- can be fixed in a first operating position, in which they only project into the openings (22) of a drilling tool (2) with large diameter and additionally
- can be fixed in a second operating position, in which they project into the openings (22) of a drilling tool (2) with small diameter.

5. Tool receptacle 1 according to one of the preceding claims, **characterized in that** the spacer ring (4) consists of segments,
- which are fastened on the tool receptacle (1) so as to be pivotable and
- which are pivotable out of the first hollow-cylindrical receptacle (11) beyond the diameter thereof.

6. Tool receptacle (1) according to claim 5, **characterised in that**
- the segments are spaced with respect on one another on the circumference of the spacer ring (4) and
- the spacings form the passages (41) for the locking bolts.

7. Tool receptacle (1) according to claim 1, **characterised in that** they
- comprise a first hollow cylindrical recess (11) with large internal diameter and,
- comprise a second hollow cylindrical recess (12) with small internal diameter, which, in an operating position, is disposed above the first hollow-cylindrical receptacle (11) and
- for each of the two receptacles (11, 12) at least one lock (3) with a locking bolt (31) is present in each case.

8. Tool receptacle (1) according to one of the preceding claims, **characterised in that** the locks (3) can be remotely operated, for example via pneumatic cylinders, hydraulic cylinders or electric drives.

## Revendications

1. Réception d'outil (1) sur un mécanisme de forage pour outils de forage (2) en forme de tuyau ayant au moins deux différents diamètres (21), sachant que la réception (1) est équipée
- d'une réservation (11) cylindrique creuse, dont la largeur intérieure correspond aux dimensions extérieures de l'outil de forage (2)
et
- ayant au moins un boulon de verrouillage (31) orienté dans le sens radial,
- qui est incorporé dans la paroi de la réservation (11) cylindrique creuse et
- qui vient s'engrener dans une ouverture (22) correspondante de l'outil de forage (2),
**caractérisée par le fait**
**qu'**il y a au moins une autre réservation (5) cylindrique creuse, qui est complémentaire aux dimensions extérieures des autres outils de forage (2).

2. Réception d'outil (1) selon la revendication 1, **caractérisée par le fait**
- **qu'**il est possible d'insérer une bague d'écartement (4) dans une première réservation (11) cylindrique creuse de grand diamètre intérieur,
∘ qui présente une réservation (5) cylindrique creuse ayant un petit diamètre intérieur et
∘ qui contient des passages (41) pour les boulons de verrouillage (31),
- les boulons de verrouillage (31) étant rallongés de manière à dépasser dans les ouvertures (22) d'un outil de forage (2) ayant un petit diamètre à travers les passages (41) de la bague d'écartement (4).

3. Réception d'outil (1) selon la revendication 2, **caractérisée par le fait**
- **qu'**une première série de verrouillages (3) présente des boulons de verrouillage (31) courts, qui peuvent être insérés dans les ouvertures (22) d'un outil de forage (2) ayant un grand diamètre, et
- **qu'**une seconde série de verrouillages (3) présente de longs boulons de verrouillage (31),
∘ qui peuvent être poussés à travers les passages (41) jusque dans les ouvertures (22) de petit diamètre et
∘ qui peuvent être rétractés jusque dans la paroi de la première réception cylindrique creuse (11).

4. Réception d'outil (1) selon la revendication 2, **caractérisée par le fait que** les boulons de verrouillage (31) des verrouillages (3)
- peuvent être fixés dans une première position de travail dans laquelle ils ne dépassent que jusqu'aux ouvertures (22) d'un outil de forage (2) ayant un grand diamètre et
- peuvent en outre être fixés dans une deuxième position de travail dans laquelle ils dépassent jusque dans les ouvertures (22) d'un outil de forage (2) ayant un petit diamètre.

5. Réception d'outil (1) selon une des revendications précédentes, **caractérisée par le fait que** la bague d'écartement (4) consiste en segments
- qui sont fixés de façon pivotable sur la réception d'outil (1) et
- qui peuvent être pivotés hors de la première réception (11) cylindrique creuse jusqu'au-delà de leur diamètre.

6. Réception d'outil (1) selon la revendication 5, **caractérisée par le fait**
- **que** les segments sont situés à une certaine distance les uns des autres par rapport à la circonférence de la bague d'écartement (4),
- les distances constituant les passages (41) destinés aux boulons de verrouillage.

7. Réception d'outil (1) selon la revendication 1, **caractérisée par le fait**
- **qu'**elle présente une première réception (11) cylindrique creuse ayant un grand diamètre et
- **qu'**elle présente une seconde réception (12) cylindrique creuse ayant un petit diamètre, qui est disposée au-dessus de la première réception (11) cylindrique creuse en position de travail et
- **qu'**il y a pour chacune des deux réceptions (11, 12) au moins un verrouillage (3) avec un boulon de verrouillage (31).

8. Réception d'outil (1) selon une des revendications précédentes, **caractérisée par le fait que** les verrouillages (3) peuvent être actionnés de loin, p.ex. via des vérins pneumatiques, des vérins hydrauliques ou des entraînements électriques.
